# EUROPEAN PATENT APPLICATION

(11) **EP 1 207 699 A2**
(43) Date of publication of application: **22.05.2002**
(21) Application number: 01120652.1
(22) Date of filing: 30.08.2001
(51) Int. Cl.: H04N 7/173

(54) **A method for providing advertisement information and apparatus thereof**

(30) Priority: 17.11.2000 JP 2000355628
(71) Applicant: Hitachi, Ltd., Chiyoda-ku, Tokyo 101-8010 (JP)
(72) Inventor: Nagano, Satoshi, Kunitachi-shi, Tokyo 186-0002 (JP); Asami, Kazuo, Matsudo-shi, Chiba 271-0076 (JP)
(74) Representative: Beetz & Partner Patentanwälte

(57) **Abstract**

A method for providing and sending advertisement information (122,142) via satellite wave or terrestrial radio wave, receives history information (124,144) from the broadcasting receiver terminal (150) having the advertisement information which has been played, and calculates the advertisement charge to be paid by a commercial sponsor (110).

## Description

### BACKGROUND OF THE INVENTION

The present invention relates to a method for providing advertisement and the apparatus thereof, and particularly to a method for providing suitable services to the commercial sponsor and viewers by sending advertisement information by radio wave via satellite or terrestrial radio wave, and the apparatus thereof.

In the broadcasting with advertisement provided by private broadcaster according to the prior art, the same program and advertisement have been sent alternately in terms of time to all viewers. Independently of whether viewers are interested in them or not, received advertisement has been played.

To solve this problem, a broadcasting receiver is considered where advertisements alone are stored in advance, and those conforming to the taste of viewers are selected from them and are played. Such a receiver is disclosed in Japanese Application Patent Laid-Open Publication NO. Hei 11-55636, for example.

However, there is no way for commercial sponsors to know whether the advertisement provided by them are watched by viewers or not. The advertisement charge is determined by the program viewership and broadcasting time, and sponsors have often been forced to pay charges not conforming to the advertisement actually viewed.

### SUMMARY OF THE INVENTION

The object of the present invention is to provide a means for promoting the advertisement to be watched by viewers and for collecting appropriate advertisement charges by making sponsors know the type of advertisement which conforms to the taste of viewers.

The above object can be attained by the present invention which sends advertisement information by radio wave via satellite or terrestrial radio wave, receives history information from the broadcasting receiver having played the advertisement information and calculates the advertisement charge to be paid by a sponsor.

### BRIEF DESCRIPTION OF THE DRAWINGS

Fig. 1 is a diagram representing the system as a first embodiment of the present invention;
Fig. 2 is a diagram representing the business relationship as a first embodiment shown in Fig. 1;
Fig. 3 is a diagram representing the system configuration of a commercial sponsor, advertisement administration firm and program provider as a first embodiment of the present invention;
Fig. 4 is a diagram representing the business relationship among a commercial sponsor, advertisement administration firm and end user;
Fig. 5 is a diagram representing the business relationship wherein an information receiver terminal with advertisement stored therein in advance is distributed as a first embodiment of the present invention;
Fig. 6 is a diagram representing the business relationship wherein advertisement is published, updated and deleted among a commercial sponsor, advertisement administration firm and end user;
Fig. 7 is a diagram representing the system configuration of an advertisement administration firm as a first embodiment of the present invention;
Fig. 8 indicates a broadcasting receiver terminal as a first embodiment of the present invention;
Fig. 9 is a diagram representing the business relationship as a second embodiment of the present invention;
Fig. 10 is a diagram representing the business relationship as a third embodiment of the present invention;
Fig. 11 is a diagram representing the business relationship as a fourth embodiment of the present invention;
Fig. 12 is a diagram representing the business relationship in the form of free broadcasting with advertisement or paid broadcasting without advertisement;
Fig. 13 is a diagram representing the business relationship in the form of free broadcasting with advertisement or paid broadcasting without advertisement;
Fig. 14 is a diagram representing an example of indication on the display in one embodiment according to the present invention;
Fig. 15 is a diagram representing another example of indication on the display in one embodiment according to the present invention;
Fig. 16 is a diagram representing still another example of indication on the display in one embodiment according to the present invention;
Fig. 17 is a diagram representing an example of playing data on the information receiver terminal in an embodiment according to the present invention;
Fig. 18 is a diagram representing an example of entering the level of interest into the information receiver terminal in an embodiment according to the present invention;
Fig. 19 is a diagram representing an example of selecting and entering advertisement into the information receiver terminal in a embodiment according to the present invention;
Fig. 20 is a diagram representing an example of selecting and entering advertisement into the information receiver terminal in another embodiment according to the present invention;
Fig. 21 is a diagram representing an example of selecting and entering advertisement into the information receiver terminal in still another embodiment according to the present invention;
Fig. 22 is a diagram representing an example of selecting and entering advertisement into the information receiver terminal in a further embodiment according to the present invention;
Fig. 23 is a diagram representing an example of selecting and entering advertisement into the information receiver terminal in a still further embodiment according to the present invention; and
Fig. 24 is a diagram representing an embodiment of how to determine the order of play.

### DETAILED DESCRIPTION OF THE INVENTION

The following describes the embodiments according to the present invention with reference to diagrams:

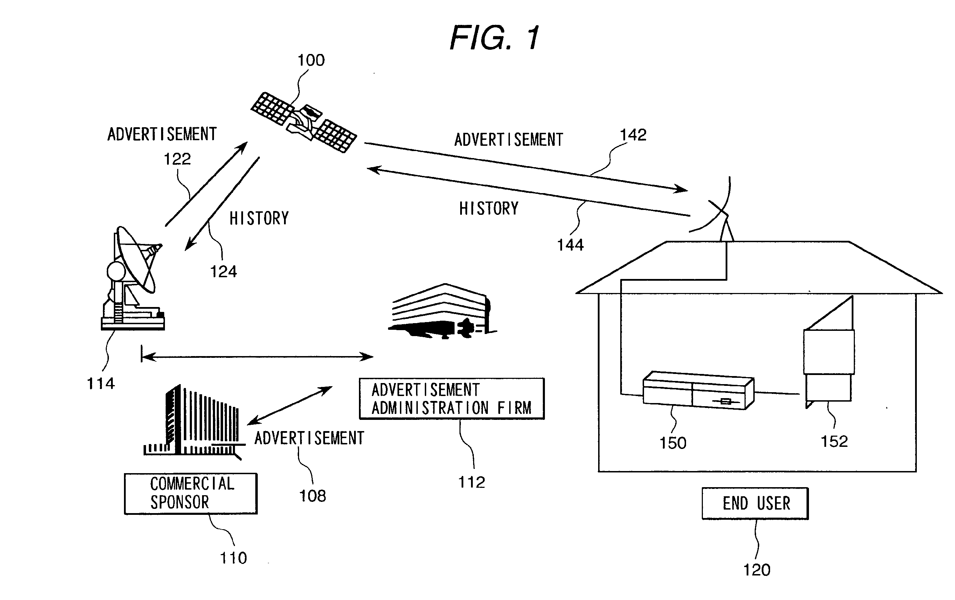

Fig. 1 is a diagram representing the system as a first embodiment of the present invention.

The following describes the present embodiment with reference to the situation involving the following three parties; a sponsor 110 desiring to publicize an advertisement 108 an advertisement administration firm 112 to broadcast the advertisement 108 for the sponsor, and a end user 120 to receive and view the broadcast 142 containing the advertisement via satellite or the like:

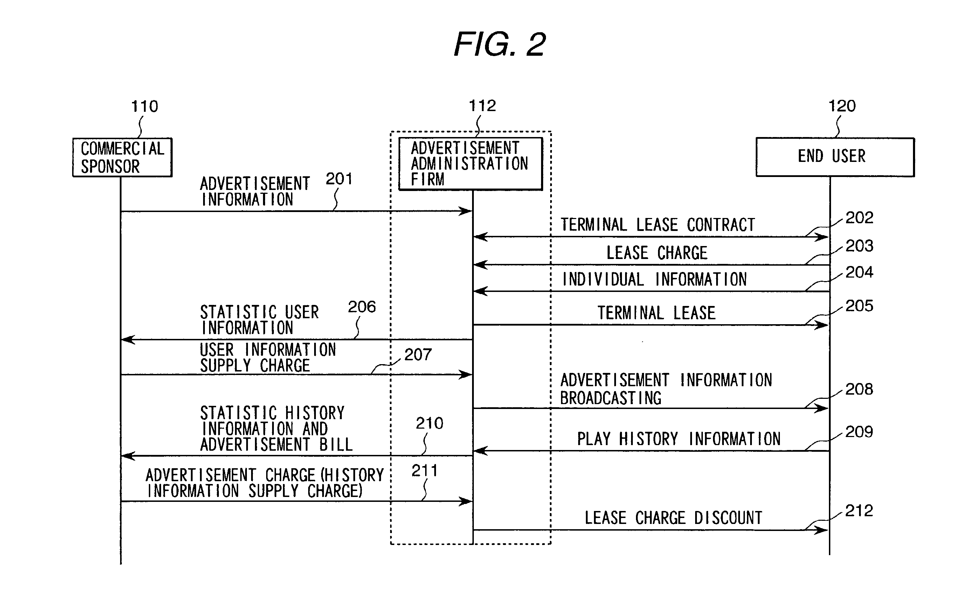

Fig. 2 is a diagram representing the business relationship according to the present embodiment.

The present embodiment is a form of business which provides a means for an economical rental of receiver terminal 150 by the end user 120 viewing the advertisement. To put it more specifically, a rental contract on receiver terminal 150 is signed between the advertisement administration firm 112 and end user 120 based on a certain advertisement watch rating. If the advertisement watch rating fails to meet a specified condition, the rental charge is transferred to the next month. If the watch rating has exceeded a certain level, discount is applied to the rental charge as a merit charge.

The following describes the flow of business:

An advertisement administration firm 112 calling for advertisement information. Informed of this call and desiring to publicize advertisement, a commercial sponsor 110 provides advertisement information to the advertisement administration firm 112 (Step 1). The information can be provided via a cable communications line including Internet, ISDN (Integrated Services Digital Network), DSL (Digital Subscriber Line), or fiber-optic cable, radio communications, or recording media including CD-ROM. In this case, an agreement may be signed between the advertisement administration firm and commercial sponsor regarding the term of validity of the advertisement, method for advertisement charge calculation or the like.

The advertisement administration firm 112 signs a specified agreement with an end user 120 desiring to rent a terminal as well (Step 202). For example, a one-month rental agreement is signed, and the rental charge for viewing of the advertisement consisting of a specified amount and time of data is paid in advance (Step 203). The type of the advertisement to be viewed and timing can be set by the end user 120 as desired.

At the time of this agreement, the end user 120 provides personal information to advertisement administration firm (Step 204). For example, it provides such information as the address, name, age and telephone number as well as the field of the product, the name of the company and name of the television personality as required. Furthermore, information on general hobbies is also provided in some cases if the end user permits. As more information is provided, the rental charge is reduced or the end user can specify the information which may be disclosed.

After this agreement has been established, a new IC card recording the user ID or the like is issued. This is used for user identification when the terminal is used. IC cards including the already issued CAS card (a card intended for conditional access) are updated to view the paid broadcasting channel.

The advertisement administration firm 112 takes charge of the administration of personal information provided. At the request of commercial sponsor 110, it may provide the personal information (Step 206). In this case, the personal information provided is determined based on the agreement with the end user 120. A communications line or recording media such as CD-ROM can be used to send personal information. Furthermore, every time personal information is obtained, it can be supplied to commercial sponsor 110. Or multiple pieces of personal information can be provided collectively at a certain interval. Furthermore, it is preferred to provide not only the information for personal identification but also the information having been edited into statistic information. However, if information for personal identification and more detailed information can be provided according to the agreement with the end user, such information is sent to the commercial sponsor 110.

The commercial sponsor 110 pays the price for the amount and quality of received personal information to advertisement administration firm 112 (Step 207). It is also possible to make sure that user information can be provided if the price is paid, even when the commercial sponsor does not provide information. Payment can be made by allowing such a price to be included in advertisement charge.

According to the present embodiment, advertisement information is sent to the end user 120 after payment of the user information supply charge by commercial sponsor 110. It is also possible to request the advertisement administration firm 112 to send advertisement information alone, without user information being supplied.

The advertisement administration firm 112 sends advertisement information to end user 120 by broadcasting (Step 208). terrestrial radio wave, satellite broadcasting or a satellite on highly elliptical orbit in particular is used as a means of broadcasting. This advertisement information can be received and viewed without using the terminal by rental.

The receiver terminal 150 owned by the end user 120 receives advertisement information and record it on the hard disk in the form of an advertisement storage data file. The end user can select a desired one from the recorded advertisements and play it. However, when the advertisement assigned in advance is to be played by replacement, the original advertisement is required to be the advertisement of the advertisement administration firm.

When an advertisement has been played, the commercial sponsor, content, classification and time of play of the played advertisement are recorded and stored on a hard disk.

The history of played advertisement stored in the receiver terminal 150 is sent to the advertisement administration firm 112 by uplinking (144) via the satellite used for broadcasting receiver (Step 209). The history can also be sent to the advertisement administration firm by the Internet of the wired communications line, in addition to uplinking via the satellite.

The advertisement administration firm 112 sorts out the received histories for each commercial sponsor or advertisement, and edits it into statistic information on the number of viewers, viewing rating and average viewing time per person. Based on this statistic information, advertisement charge paid by the sponsor is calculate, and a bill is sent to the sponsor together with the statistic history information (Step 210). In this case, a bill or its CD-ROM may be sent by mail or wired or wireless communications line may be used.

After that, the commercial sponsor 110 pays advertisement charges to the advertisement administration firm 112 (Step 211). One month after signing of the agreement, discount of the rental charge or other privileges are awarded to the end user 120 as a merit change by the advertisement administration firm 112 if advertisement information has been viewed in excess of the amount determined in advance (Step 212). If viewing of the advertisement information fails to reach a specified level, that amount is added to the rental charge is paid in the next month based on the agreement. Needless to say, deferred payment of the rental charge can be employed so that actual rental charge reflecting the advertisement viewing is paid by the end user 120 every month.

The following describes a detailed embodiment of the present invention with reference to diagrams: According to this embodiment, advertisement created by the commercial sponsor 110 is sent to the receiver terminal 150 of the end user 120 through the advertisement administration firm 112, and is viewed. The viewing history of the end user 120 and information on the end user are collected by the advertisement administration firm and are sent to commercial sponsor 110.

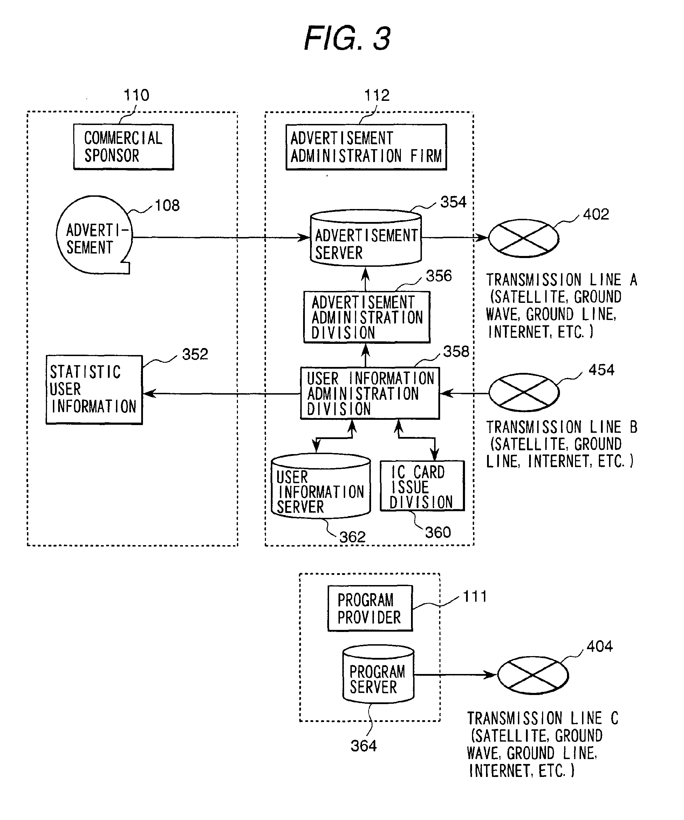

Fig. 3 shows an example of the system configuration. This embodiment indicates the system configurations of a commercial sponsor 110, advertisement administration firm 112 and 111 program provider. The advertisement 108 created by the commercial sponsor 110 and desired to be publicized is stored in the advertisement server 354 of the advertisement administration firm 112 via the transmission means 104. The transmission means 104 used here can be a wired or wireless telecommunications means or a recording medium such as CD-ROM. At the request of the commercial sponsor 110, the advertisement administration firm 112 determines the user to whom advertisement is distributed at the advertisement administration division 356 according to the user information stored in the user information server 362 administered by a user information administration division 358. For the user to whom advertisement is distributed, the advertisement administration division 356 stores the advertisement stored in the advertisement server 354 via the transmission line A 402 in the storage unit such as a hard disk in the receiver terminal 150 as an advertisement data file 414. Broadcasting by satellite or terrestrial radio wave, communications by satellite or terrestrial radio wave, the ground line such as an optical fiber cable, ISDN, DSL, or telephone, or the Internet is used as the transmission line A 402 for this advertisement distribution. The program stored in the program server 364 is sent from the program provider 111 to the receiver terminal 150 by the transmission line C 404, the same transmission line as the transmission line A 402 or different from it. This program is stored in the storage unit such as a hard ware in the receiver terminal 150 as a program data file 408. When an end user wants to view the receiver terminal 150, he is checked by an IC card 482 to see if he is authorized to get information or not. At the same time, user information such as the ID, age and sex of the end user is input into the broadcasting receiver terminal. More detailed information of the end user can be input and set by the remote control 480 or touch panel 450. When the end user is different from the IC card owner, the remote control 480 or touch panel 450 is also used for input and setting. User information input and setting include information on tastes and hobbies in advertisement viewing and are used for setting in advertisement viewing. Based on this setting, user information and advertisement viewing information are input into the interest storage 444. When the end user views the program recorded in the program data file 408, the advertisement suited to the user's taste is selected by the interest comparator 442 from multiple advertisements stored in the advertisement data file 414, and this advertisement is played during viewing of the program whenever appropriate and indicated on the display 152 via the indicator 432. In this way, the user can view the program with advertisement.

This advertisement is shown on the display 152 through indicator 432 when the receiver terminal 150 has started, when the program has been downloaded or when radio frequency interference has occurred due to a drop in reception level.

The following describes another more detailed embodiment of the present invention with reference to diagrams: This example shows a flow of the lease of an information receiver terminal and supply of statistic user information among the commercial sponsor, advertisement administration firm and end user.

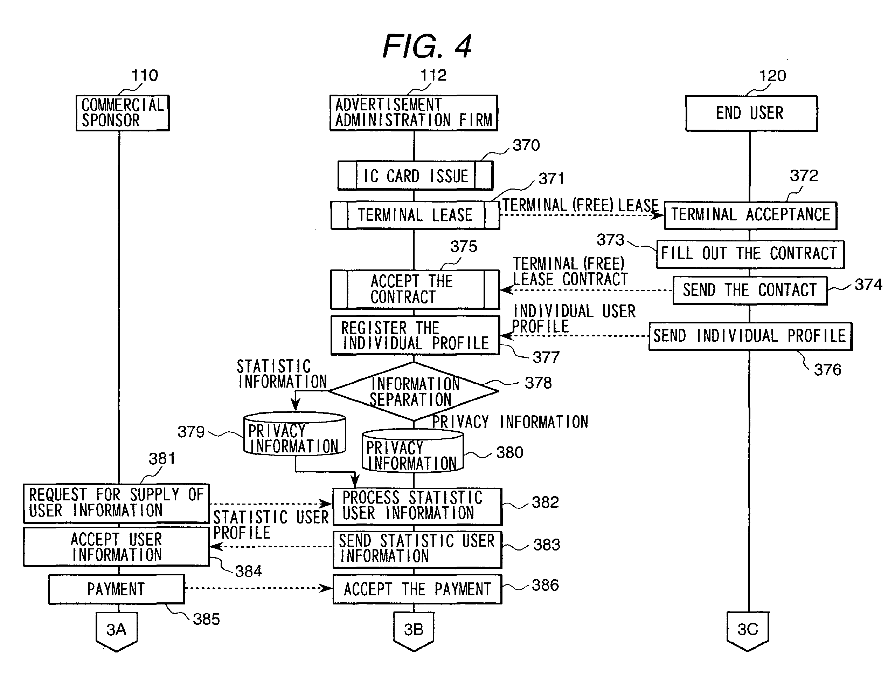

In Fig. 4, the advertisement administration firm 112 issues an IC card 482 (Step 370), and signs a rental agreement of information receiver terminal with an end user 12 (Step 371). When or after the end user 120 has received the information receiver terminal, application form for this agreement is sent or distributed to the end user by the advertisement administration firm 112. Then the end user 120 fill out this application form for agreement (Step 373) and sends it to the advertisement administration firm 112 (Step 374) to be accepted (Step 375). After that or in parallel with that, the user profile of the end user 120 is sent to the advertisement administration firm 112 and is registered as an individual file (Step 377). The registered individual profile is separated into two types of information; one is personal information which can identify the individual and the other is statistic information which cannot (Step 378). They are independently recorded (Steps 379 and 380). The advertisement administration firm 112 issues an IC recording the user ID corresponding to the user based on the registered information, or matching is found between the IC card created in Step 370 and user information. The information receiver terminal 150 matched with the IC card is sent to the end user. When it is accepted by the end user, lease agreement starts. Of the multiple individual pieces of information registered, the statistic information which can identify the individual is processed by the advertisement administration firm 112 at the request of user information supply by the commercial sponsor 110 (Step 381), and sends statistic user information to the commercial sponsor 110 (Step 382). The commercial sponsor 110 receives the statistic user information and makes a payment to the advertisement administration firm 112 (Step 385).

The following describes a still another detailed embodiment of the present invention with reference to diagrams: According to this embodiment, the information receiver terminal where advertisement is stored in advance is given to an end user or commercial sponsor acquires a statistic individual user profile. After advertisement expenses have been received from the commercial sponsor, the information receiver terminal displays the advertisement.

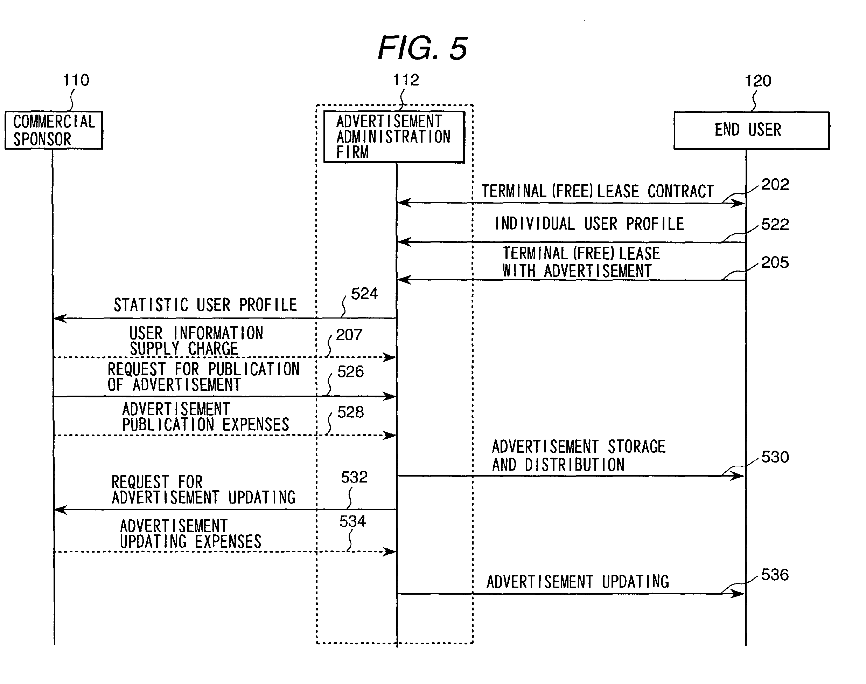

In Fig. 5, an advertisement administration firm 112 signs a specified agreement with an end user 120 desiring to lease a terminal (Step 202). Subsequently or simultaneously with the agreement, the end user 120 supplies an individual user profile containing personal information to the advertisement administration firm 112 (Step 522). The advertisement administration firm 112 leases the information receiver terminal 150 with advertisement 150 stored therein to the end user 120, or supplies it free of charge, depending on the case (Step 205). The advertisement administration firm 112 processes the statistic user profile and sends the statistic user profile to the commercial sponsor 110 (Step 524).

The commercial sponsor 110 pays the user information supply charge to the advertisement administration firm 112 for the acquisition of the statistic user profile (Step 207). The commercial sponsor 110 having evaluated this statistic user profile requests the advertisement administration firm 112 to publicize the advertisement (Step 526), and pays the advertisement publication expenses 528 for display of the advertisement 108 stored in the information receiver terminal 150 (Step 528).

The advertisement administration firm 112 sends to the information receiver terminal 150 owned by the end user the advertisement display command signal for allowing advertisement to be displayed, and the advertisement sent thereafter is stored and displayed (Step 530).

Then the commercial sponsor 110 requests the advertisement administration firm 112 to update the advertisement (Step 532), and pays advertisement updating expenses for updating advertisement (Step 534). The advertisement administration firm 112 sends new advertisement information to the information receiver terminal 150 in order to update the advertisement stored in the information receiver terminal 150 owned by the end user (Step 536).

The following describes a further detailed embodiment of the present invention with reference to diagrams: This embodiment shows a flow of publication, updating and deletion of advertisement among the commercial sponsor, advertisement administration firm and end user.

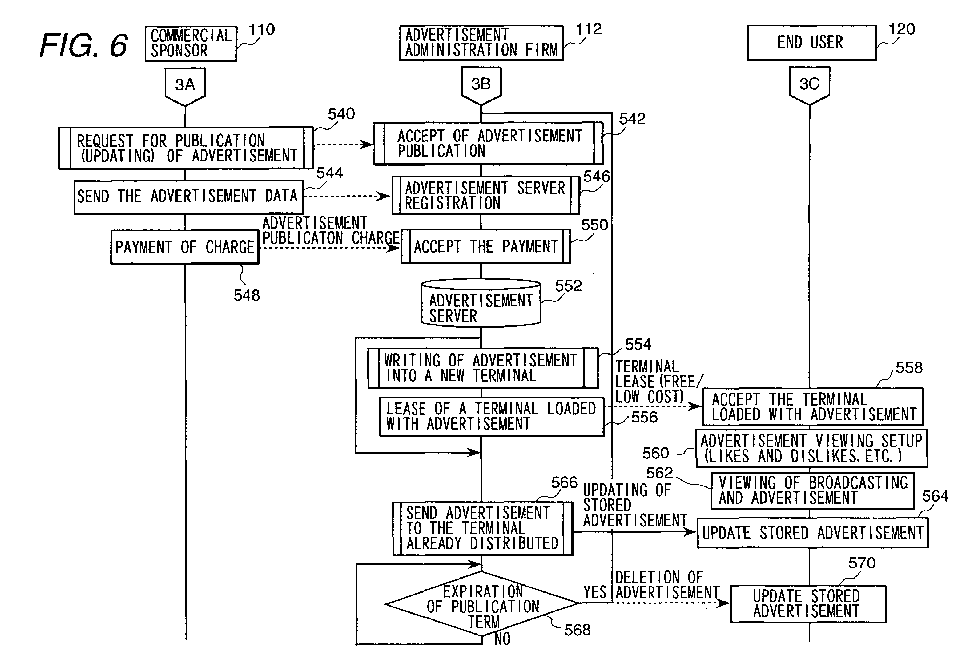

In Fig. 6, the advertisement administration firm 112 requests the commercial sponsor 110 to publicize or update the advertisement (Step 540). When this request is accepted, publication or updating of advertisement is consigned to the advertisement administration firm 112 (Step 542). The commercial sponsor 110 sends the advertisement data to be publicized to the advertisement administration firm 112 (Step 544) and the advertisement administration firm registers this advertisement in the advertisement server (Step 546). The commercial sponsor 110 makes a payment to the advertisement administration firm for publication of the advertisement (Step 548) and the advertisement administration firm accepts it (Step 550). The advertisement registered in the advertisement server (Step 552) is recorded in advance as an advertisement data file 414 in a new information receiver terminal 150 to be leased to the end user before it is leased to the end user. In the phase (Step 205) of leasing the information receiver terminal 150 to the end user shown in Fig. 5, advertisement is stored in the information receiver terminal 150 in advance, as described above. The information receiver terminal 150 with the advertisement recorded therein is leased to the end user (Step 556) and the end user accepts it (Step 558). The end user enters and sets personal information such as age and sex as well as related information into the user terminal. Product groups, companies and advertisement performers the watching of which are not liked or disliked are set up (Step 560). Based on this setting, the programs containing the advertisement which the viewer wants to watch are viewed (Step 562). At the request of the commercial sponsor 110, the advertisement administration firm 112 advertisement adds or updates the advertisement data file 414 stored in the information receiver terminal 150 already distributed to the end user (Step 566). This updating is performed via the transmission line (Step 564). Furthermore, from the information receiver terminal 150, the advertisement administration firm 112 deletes the data file 414 of the advertisement whose publication term has already expired (Step 568). This deletion is carried out via the transmission line or automatically by the calendar function in the user terminal when the term of publication has expired (Step 570).

The following describes the systems on the side of the advertisement administration firm and end user and the processing flow thereof:

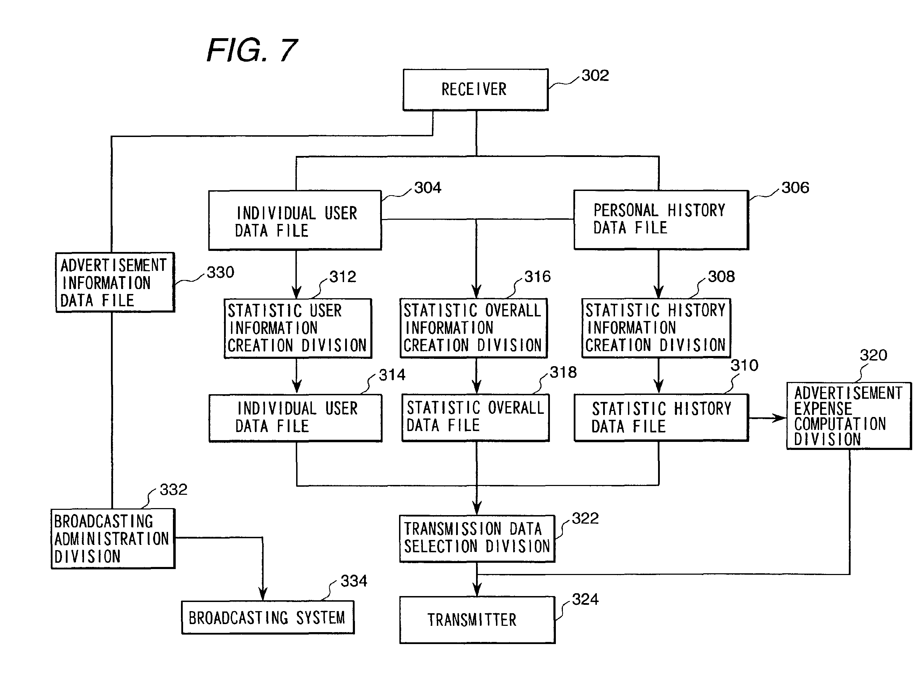

Fig. 7 shows the system as one example of advertisement administration firm.

This system comprises as a receiver 302 at least one radio receiver for receiving the information sent through a wired communications line such as the Internet, ISDN, DSL, or optical fiber cable or a wireless means such as satellite wave or terrestrial radio wave. The details are shown below.

The receiver 302 for receiving personal information of the end user 120 has an antenna for receiving radio wave from the satellite. In order to receive the personal information of the user 120, the receiver 302 has a receiver circuit for receiving the information sent from the information receiver terminal 150 via the network such as the Internet and a recording medium read-out circuit for reading the recording medium such as CD-ROM storing the advertisement information sent from the commercial sponsor 110.

History information, personal information and advertisement information received by the above-mentioned receiver are stored in the recording circuit such as a hard disk as a personal history data file 306, individual user data file 304 and advertisement information data file 330 respectively, from time to time.

Based on the information recorded in the personal history data file 306, the statistic history information creation division 308 files the information in order to get the statistic history information which maintains individual privacy without allowing the individual to be identified, and records the statistic history data file 310 into the recording circuit such as a hard disk.

Similarly, based on the information stored in the individual user data file 304, the statistic user information creation division 312 files the information in order to get the statistic history information which maintains individual privacy without allowing the individual to be identified, and records it as a statistic user data file 314 into the recording circuit such as a hard disk.

Every time new information is received, these data files are stored after having been filtered, and data file information is sent to the commercial sponsor on a periodic basis. Furthermore, it can be supplied at the request of the commercial sponsor whenever necessary, or at a certain period of time every month. Old information can be deleted or overwritten. Alternatively, it can be stored and used as cumulative statistic information or annual statistic information.

For each commercial sponsor or for each type of the advertisement, the statistic history information contained in the statistic history data file contains at least information on the number of people having played the information in a certain time period and the total hours spent for play. Whenever required, there can be additional information on the average viewing hour per person, viewing rate and the percentage of the people viewed.

The statistic user information stored in the statistic user data file contains the age, sex and residential area of the end user 120 in terms of statistic percentage, and the field of users' interest in terms of statistic percentage, as well as information on the end user having approved of providing personal information.

This system is preferred to have a statistic overall information creation division 316. Based on the individual user data file 304 and personal history data file 306, this statistic overall information creation division 316 uses the statistic history information and individual user information stored in the data file to edit and create the advertisement trend information which indicates the type of the users watching the relevant advertisement. This information is recorded in the recording circuit in the form of a statistic overall data file 318.

Information recorded in the statistic history data file 310 is used to calculate the advertisement charge in the advertisement expense computation division 320. To put it more specifically, it is used to calculate the charge proportional to the total play time of all viewers for one month, for example, for each commercial sponsor or for each type of advertisement. Actually, it is also possible to perform calibration by assigning appropriate weights based on the information on the amount of advertisement information and the number of viewers in addition to the play time.

The transmission data selection division 322 extracts the information recorded in the statistic user data file 314, statistic overall data file 318 and statistic history data file 310 for each commercial sponsor, and send them to the transmitter 324. Furthermore, with consideration given to the contents of agreement signed between the end user 120 and commercial sponsor 110, the information stored in individual user data file 304 and the personal history data file 306 are sent to the commercial sponsor 110 only when approved by the end user 120, depending on the terms of the agreement.

The transmitter 324 adds information extracted by the transmission data selection division 322 to the information on the charge calculated by advertisement expense computation division 320, and send it to the commercial sponsor. In this case, a charge statement is mailed to the commercial sponsor, or is transmitted by a wireless means or communications network including the Internet.

Based on the specified broadcasting schedule, the information recorded in the advertisement information data file 330 is broadcast by the broadcasting administration division 332 through the uplink unit 114 by means of a broadcasting system 334 such as broadcasting satellite 100. The broadcasting schedule is determined by priority setting; for example, the advertisement with a high viewing rate or the one requested by the commercial sponsor 110 is broadcast on a priority basis. When the time limit for advertisement publication is specified by the commercial sponsor 110, the information is sent together with advertisement information.

The present invention is also provided with a system for editing the advertisement of the advertisement administration firm 112 itself and providing it to general broadcasting stations, although it is not illustrated. This advertisement is broadcast in the form of being inserted between general broadcasting programs. This enables the end user 120 to watch the advertisement by replacing it with others at the terminal.

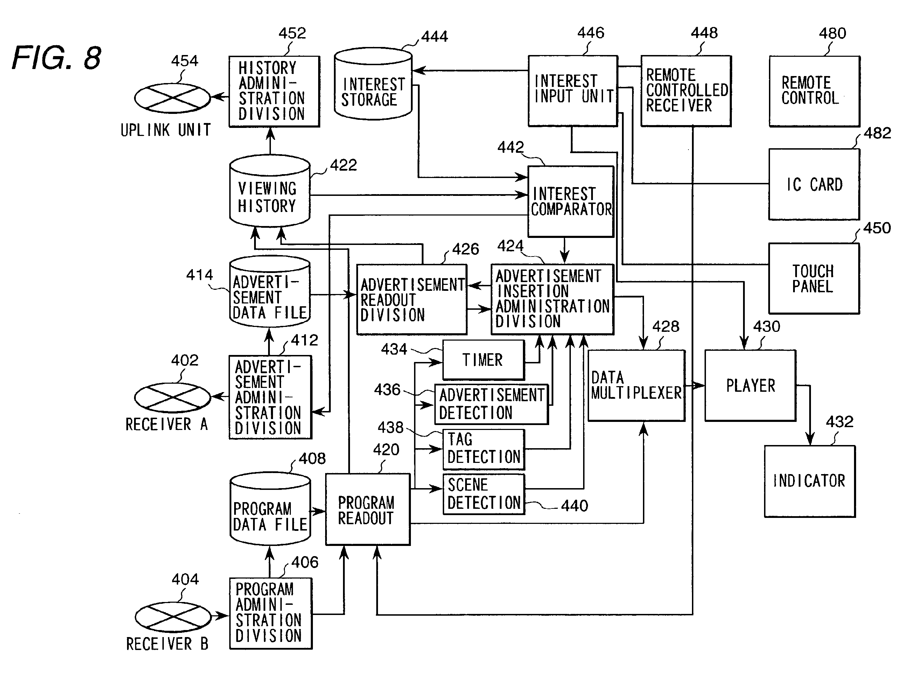

Fig. 8 shows an example of the broadcasting receiver terminal used by the end user.

This terminal comprises a receiver A 402 and receiver B 404 containing antennas for receiving satellite broadcasting such as BS/CS digital broadcasting. It is used to receive the content such as paid or free programs as well as advertisement information.

To cope with storage-based broadcasting, the received program information s recorded and stored in the recording circuit such as hard disk as a program data file 408 through the program administration division 406. The advertisement information is also recorded and stored in the recording circuit such as hard disk as an advertisement data file 414 through the advertisement administration division 412. The received advertisement information has a function of automatically deleting the stored advertisement information in conformity to the term of validity specified in advance or the command from the calendar of the terminal 150 or the clock circuit (not illustrated).

The program read-out 420 plays the programs stored in the program data file 408 and specified by a remote control 480. However, when the program read-out 420 has detected a portion allowing insertion of advertisement, reading of the program is stopped, and it is sent to a data multiplexing division 428, together with the advertisement obtained through an advertisement insertion administration division 424. The multiplex data is decoded at the player 430, and is displayed on the screen of the indicator 432.

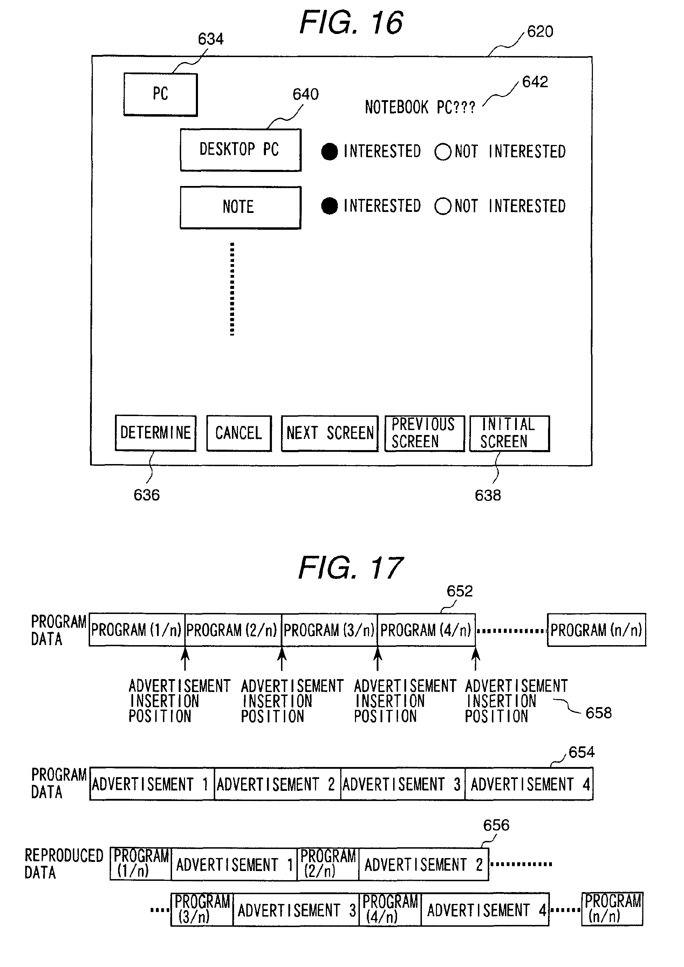

The portion allowing insertion of advertisement is preferred to consist of the advertisement of the advertisement administration firm. It can be sent when the advertisement contracted in advanced or an advertisement insertion tag has been detected. The advertisement insertion tag is an advertisement identifier assigned to the header of a program data packet 652, and includes the information on time. As shown in Fig. 17, advertisement can be inserted during this time as desired. If advertisement is not inserted in the program stored in the program data file 408, advertisement can be inserted when the image is switched or the timer is set. Advertisement can be played during the time of conditional access for decoding the coded program information. Further, it can be played when the terminal is started up, radio frequency interference has occurred, a menu including electronic program list is displayed or the program recorded in advance is searched.

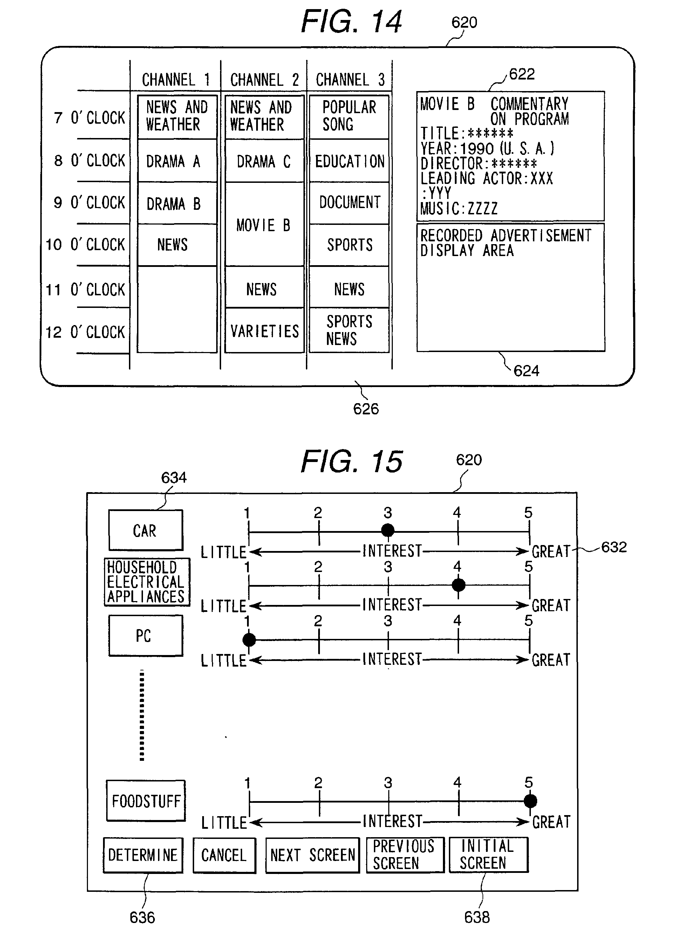

When advertisement stored in advance is played, part of the screen or voice alone can be played. In this case, the amount of data as well as the time of play must be stored. Fig. 14 shows an example where advertisement 624 is inserted and displayed when the information of movie B in the program guide 626 is selected and outputted on the display screen 620.

The advertisement insertion administration division 424 extracts the information of higher level of interest from the advertisement stored in the advertisement data file 414 through the advertisement read-out division 426. Whether information is of a higher level of interest or not is determined the interest comparator 442 according to the information on the level of interest stored in the interest storage 444. The information stored in the interest storage 444 is the one stored in advance by input means such as the touch panel 450 or remote control 480, or the IC card 482.

The following describes how to input the level of interest using the touch panel 450 or remote control 480 with reference to Figs. 15 and 16:

In the display screen 620 shown in Fig. 15, interest level 632 is changed for each advertisement product classification 634, and is set by Determine 636. Although not illustrated, it is also possible to input an initial screen 638 and to display a screen for setting the interest level for each actor of the advertisement or each company as a commercial sponsor.

Fig. 16 shows the screen for checking the level of interest regarding more detailed information on product classification 634. The level of interest can be set automatically for each product classification by inputting the entry.

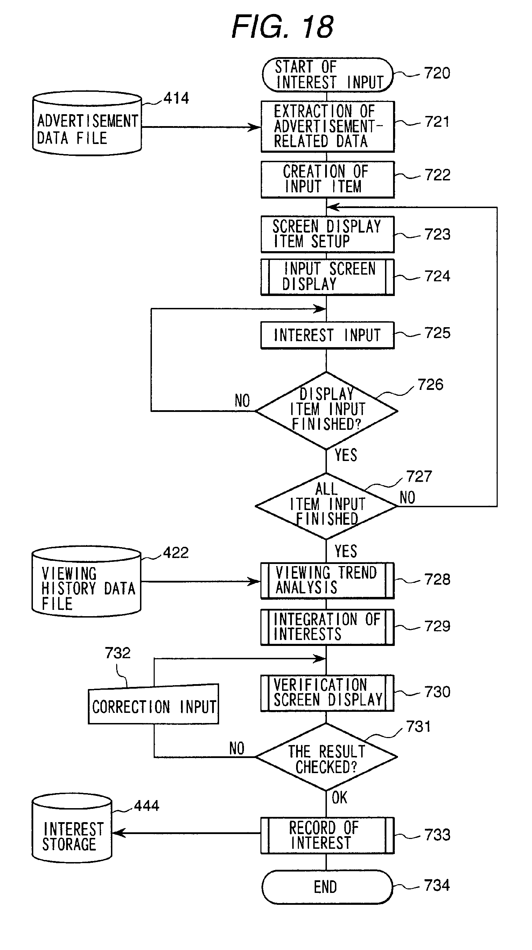

Fig. 18 indicates a processing flow showing how to enter the level of interest. The level of interest can be set with consideration given to the history of advertisements and programs viewed so far, in addition to the information entered by the viewer.

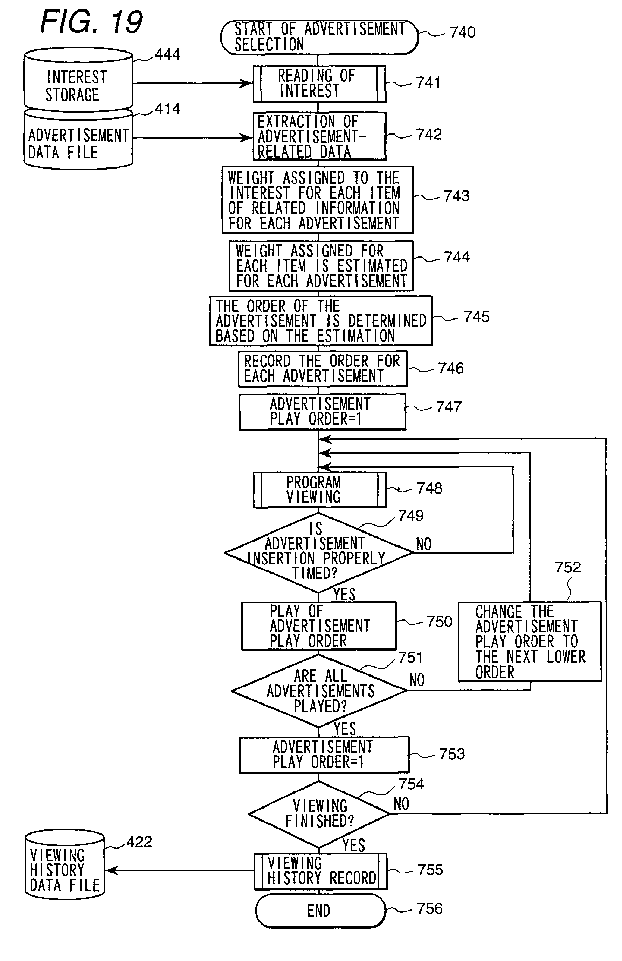

The following employs Fig. 19 to describe the processing by an interest comparator 442 for selecting the advertisement of a higher level of interest, using the information on the level of interest stored in the interest storage 444 according to the method discussed above.

Information on the level of interest is read out from the interest storage 444 (Step 741) and the advertisement related data is extracted from the advertisement data file 414 (Step 742).

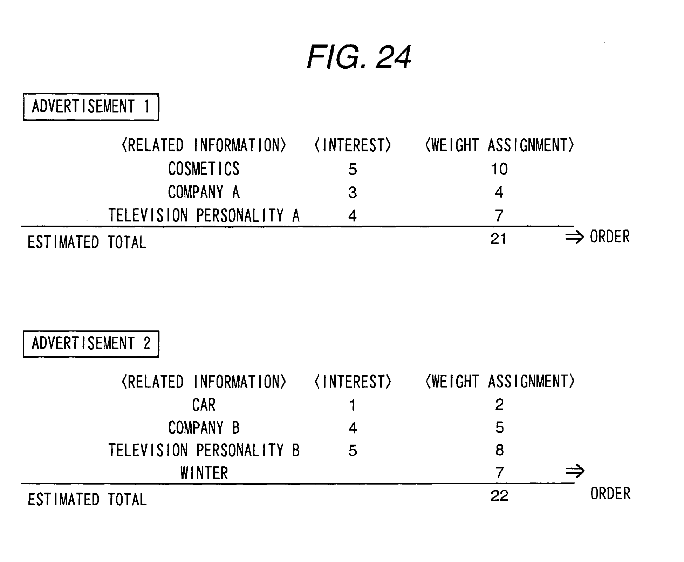

As shown in Fig. 24, weight is assigned to each item by multiplying the read level of interest by a certain coefficient for each related information item for each commercial sponsor. The top priority is given to the item having the greatest total. The related information items includes a product classification, performer, manufacturer and season. In this way, priority is determined for each advertisement.

If advertisement insertion timing is detected by the above discussed advertisement insertion tag or the like, advertisements to be played are selected in the order of priority. The advertisement in question is played by the advertisement read-out division 426. After play of the advertisement of the lowest priority, the order goes back to the advertisement of the top priority, and advertisements are played in the descending order of priority. The above-mentioned step is repeated hereafter. When the viewing of a program has come to an end, the history of watching the program and advertisement is stored in the viewing history data file 422.

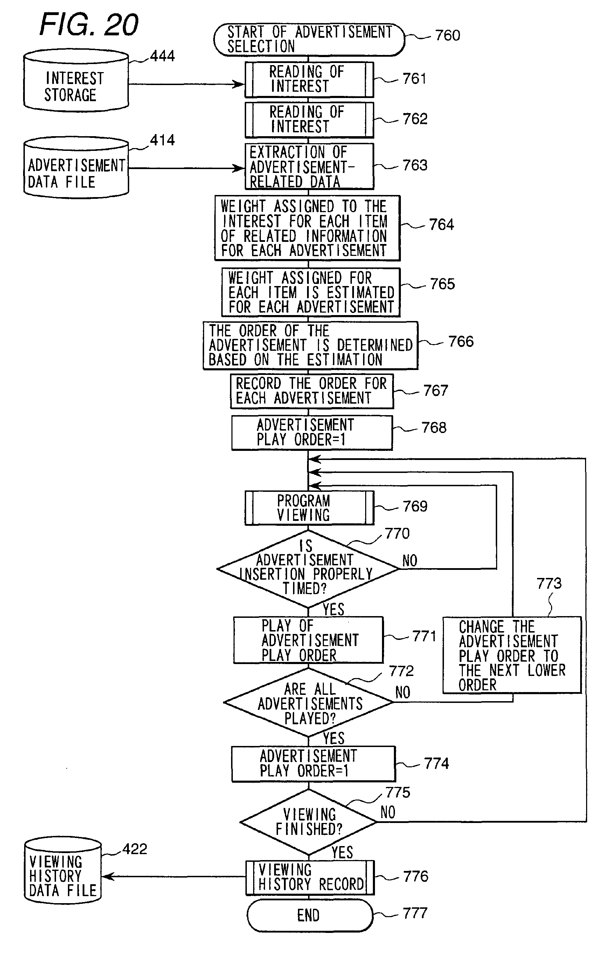

Fig. 20 shows a processing flow representing advertisements higher than a certain order are played repeatedly instead of all stored advertisements being played. Otherwise, Fig. 20 is the same as Fig. 19.

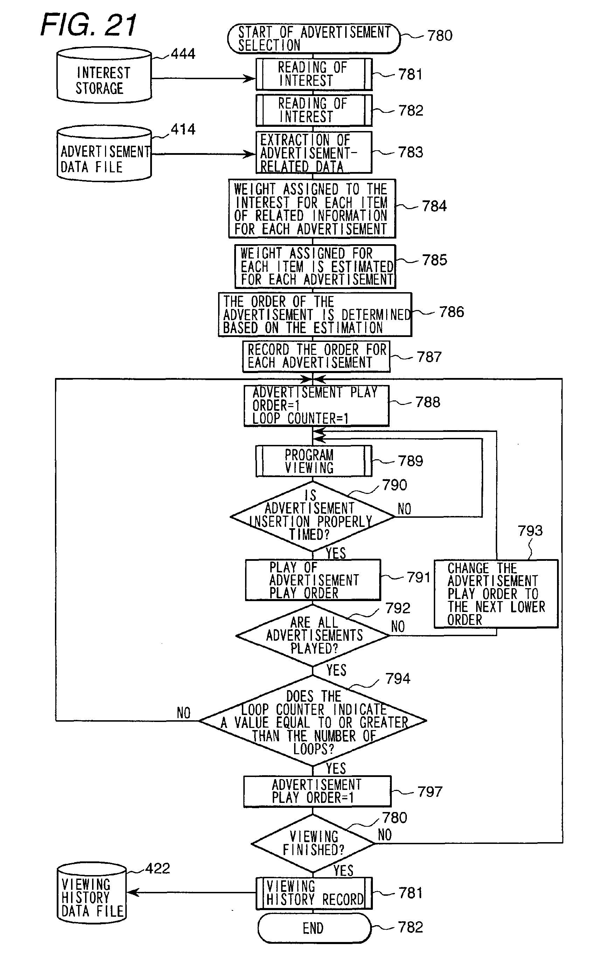

In Fig. 21, advertisements higher than a certain order are played repeatedly in the same way as in Fig. 20. When the number of repetition loops has exceeded the specified level, play is repeated in the same procedure after the order of play is lowered.

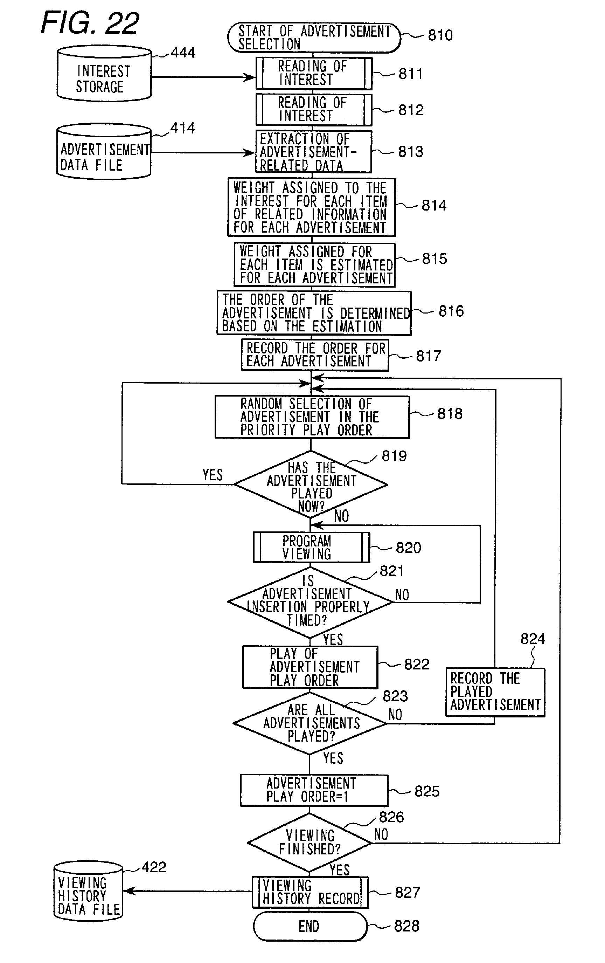

Fig. 22 shows a processing flow representing the play of random advertisements from advertisements of a certain order. In this case, the already played advertisements must be recorded to avoid continued play of the same advertisement. In this way, after all the advertisements higher than a certain order have been played, advertisements selected from the advertisements of lower order are played at random.

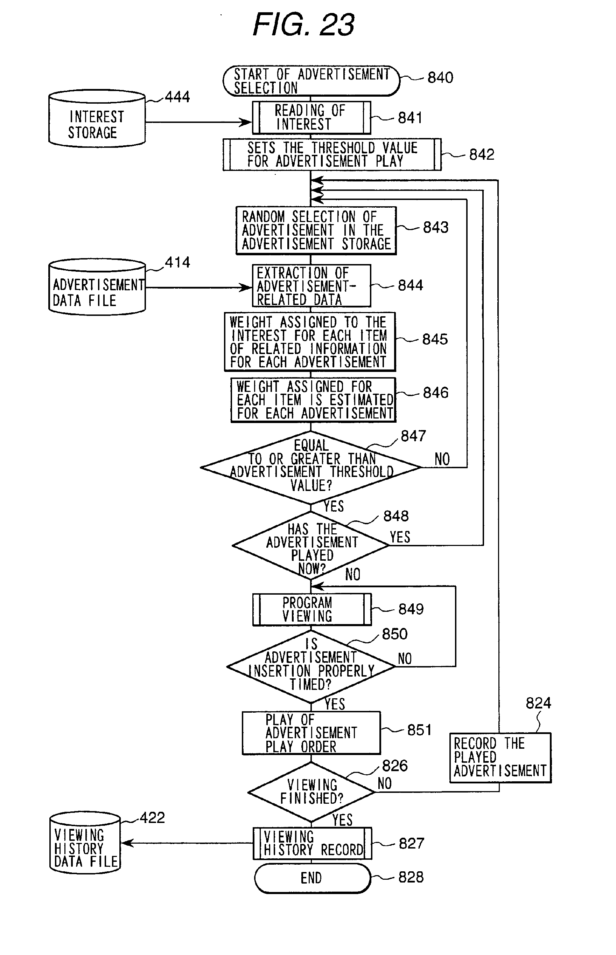

Fig. 23 shows a case of random selection from the stored advertisements without any order assigning to advertisement play. It shows that the advertisements in excess of the total of specified weights are played. In this case, the already played advertisements must be recorded temporarily in order to avoid continued play of the same advertisement.

From the stored viewing history, the history administration division 452 selects the advertisement viewing history for a certain time period and sends it to the uplink unit 454. It can be sent collectively every month by the operation of the end user, or can be sent from time to time or automatically by the terminal every play of the advertisement.

The advertisement viewing history is sent to the advertisement administration firm by an information transmission function for the satellite provided on the uplink unit 454. Preferably, a satellite on highly elliptical orbit capable of two-way communications is used. However, it can be sent by a network such as the Internet.

The system of this terminal can be a terminal for real-time broadcasting without meeting the requirements of storage-based broadcasting, where the terminal is provided with only the receiving antenna for terrestrial radio wave according to the form of use. When sending the history from time to time, the history need not be stored in the terminal.

The following describes an example of other business relationships according to the present invention:

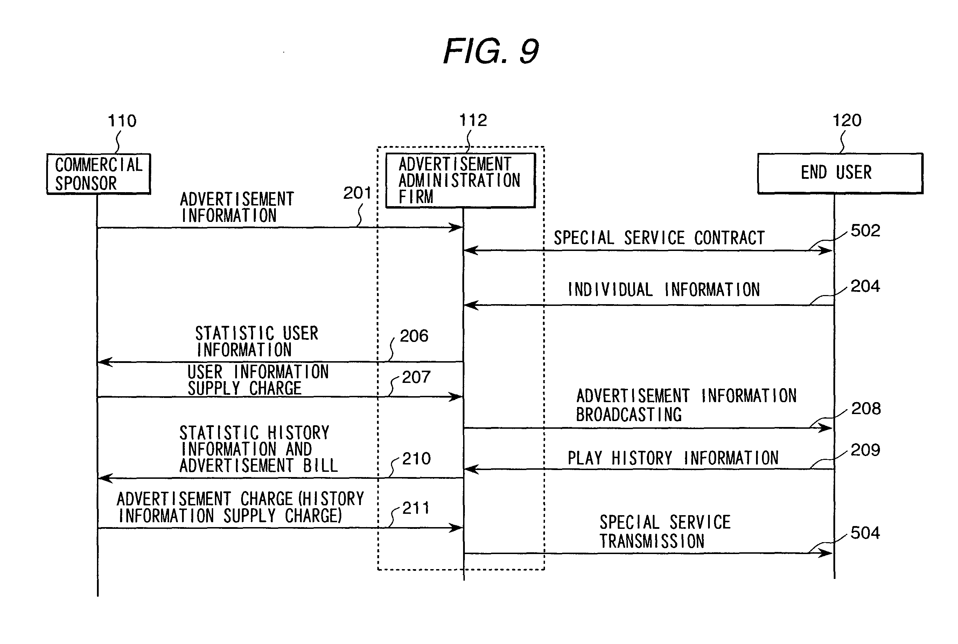

Fig. 9 shows a form of business where the end user 120 receives such privileges as coupons or points from the commercial sponsor by viewing the advertisement.

The system according to the present embodiment is basically the same as that of the above-mentioned first embodiment. The following describes only the differences from the first embodiment:

For the end user 120 to get points and other privileges, a specified contract must be signed. A privilege service contract is signed between the advertisement administration firm 112 and end user 120 (Step 502). However, to sign this contract, it is essential to own a broadcasting receiver terminal for storing advertisement. An end user 120 without this contract can view this advertisement, but the privilege as one of the services of the advertisement administration firm is not granted even when the play history is returned to the advertisement administration firm 112.

The contract can be concluded by mailing a contract form or by e-mailing via the communications line. In the former case, the user receives a contract form from the sales representative when purchasing the terminal at a sales representative, or receives it by mail. Or the contract form enclosed in the terminal package can be used. The contract form is filled out and mailed at the time of purchase or on a later date.

Such privileges as coupons and points are preferred to be granted electronically. For example, they are recorded on the IC card 482 on the side of the terminal. These privileges can be issued by the advertisement administration firm 112 on behalf of the commercial sponsor 110, and use of such privileges can be shared among the products of various commercial sponsors.

The following describes another example of other business relationships according to the present invention:

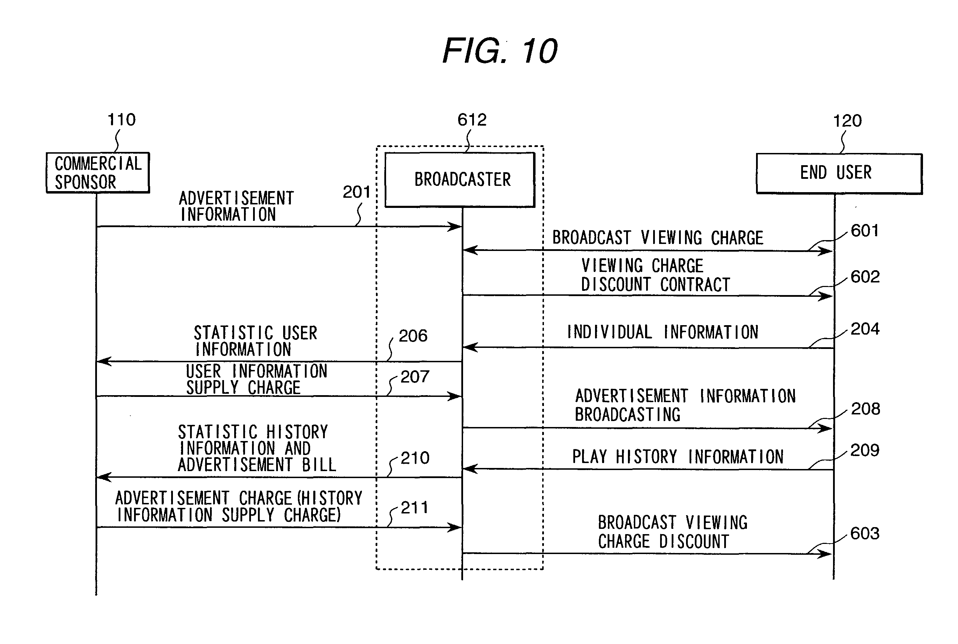

Fig. 10 shows an embodiment where a broadcaster also serves as an advertisement administration firm 112. It shows a form business wherein a discount is made off the paid broadcasting viewing charge as the merit charge as a result of the end user 120 having watched the advertisement.

The system according to the present embodiment is basically the same as that of the above-mentioned first embodiment. The following describes only the differences from the first embodiment:

The position of the broadcaster in the present embodiment is almost the same as that of the advertisement administration firm in the first embodiment. The space for replacement of the advertisement on the terminal side and broadcasting of a program guide is provided between the self-broadcast programs.

A specified contract must be concluded in order for the end user 120 to get a discount of broadcasting viewing charge. So viewing discount service contract is concluded between the broadcaster 612 and end user 120 (Step 602). To sign this contract, it is necessary to own a broadcasting receiver terminal for storing advertisements, similarly to the case of the above-mentioned embodiment. An end user 120 without this contract can view this advertisement, but services of the broadcaster 612 are not granted even when the play history is returned to the broadcaster 612.

The contract is concluded by mailing or communications line, as described above. The discount of broadcasting viewing charge (Step 603) as merit charge is provided by obtaining the discount conditions based on the advertisement information viewed at a certain interval in a month, and by requesting the viewing charge to be paid by the end user in the following month as the amount resulting from deduction of the discount rate, or by reimbursing that amount as a discount of viewing charge in cash.

The following describes still another example of other business relationships according to the present invention:

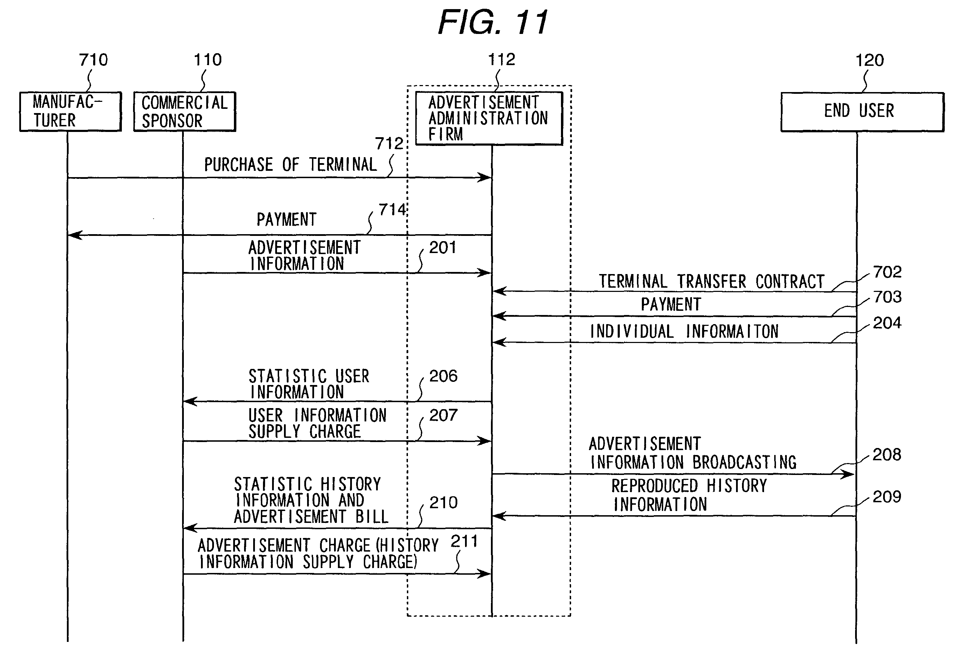

Fig. 11 shows the form of business where the advertisement administration firm sells to the end user the broadcasting receiver terminal which is cheaper by advertisement viewing charge.

The system according to the present embodiment is basically the same as that of the above-mentioned first embodiment. The following describes only the differences from the first embodiment:

In the present embodiment, the advertisement administration firm 112 collectively purchased the information receiver terminal 150 from the manufacturer 710 (Step 712), and transfers it to the end user 120 at a cheaper price. The price difference is covered by the advertisement charge from the commercial sponsor 110 paid by the end user for viewing the advertisement.

A specified contract is required for the end user 120 to get an economical information receiver terminal 150. A terminal transfer contract is concluded between the advertisement administration firm 112 and end user 120 (Step 702). In this case, transfer the information receiver terminal 150 is transferred to the end user 120 on condition that services cannot be canceled for a certain time period. In some cases, it is sold more economically to the end user 120 by the manufacturer 710 serving also as an advertisement administration firm 112 and by storing the advertisement of its own products in the terminal in advance.

The following describes a further example of other business relationships according to the present invention:

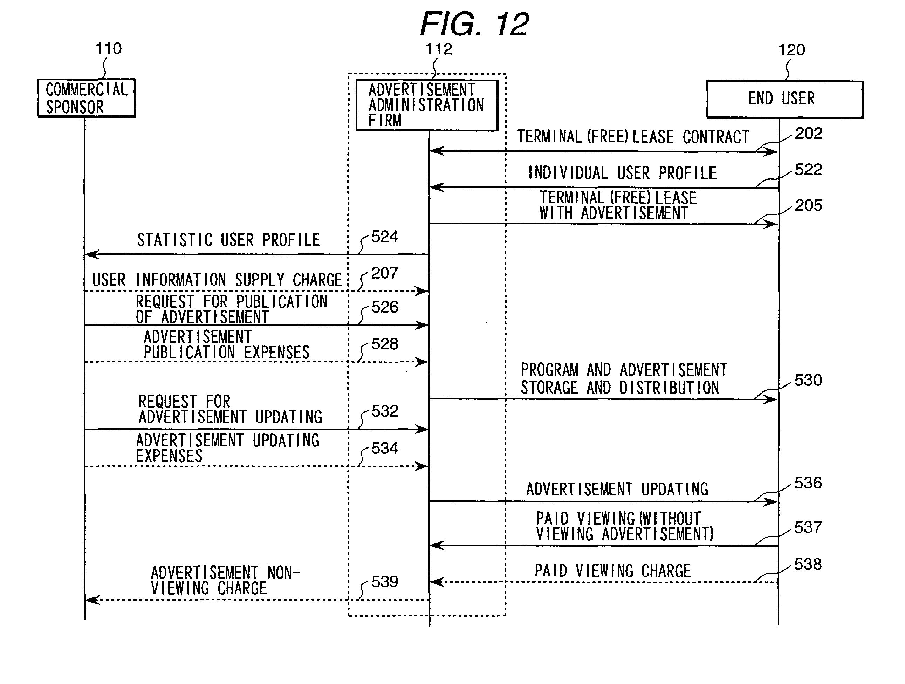

Fig. 12 shows an embodiment according to the present invention, where the information receiver terminal is used by the end user selecting whether the same program is viewed as a free broadcasting with advertisement or as paid broadcasting without advertisement.

The embodiment in Fig. 12 is the same as that of Fig. 5 up to the point where new advertisement information is sent to the information receiver terminal 150 by the advertisement administration firm 112 (Step 536).

After that, the end user 120 uses the remote control 480 or touch panel 450 of the information receiver terminal 150 to enter the command which indicates that the end user desires paid broadcasting for watching the program without viewing the advertisement (Step 537). Then the end user 120 uses the information receiver terminal 150 to send to the advertisement administration firm 112 the command that the paid viewing charge be paid from the specified bank account (Step 538).

The advertisement administration firm 112 pays to the commercial sponsor 110 the charge for the unwatched advertisement when the advertisement is not viewed (Step 539).

The following describes still another more detailed embodiment of the present invention with reference to diagrams:

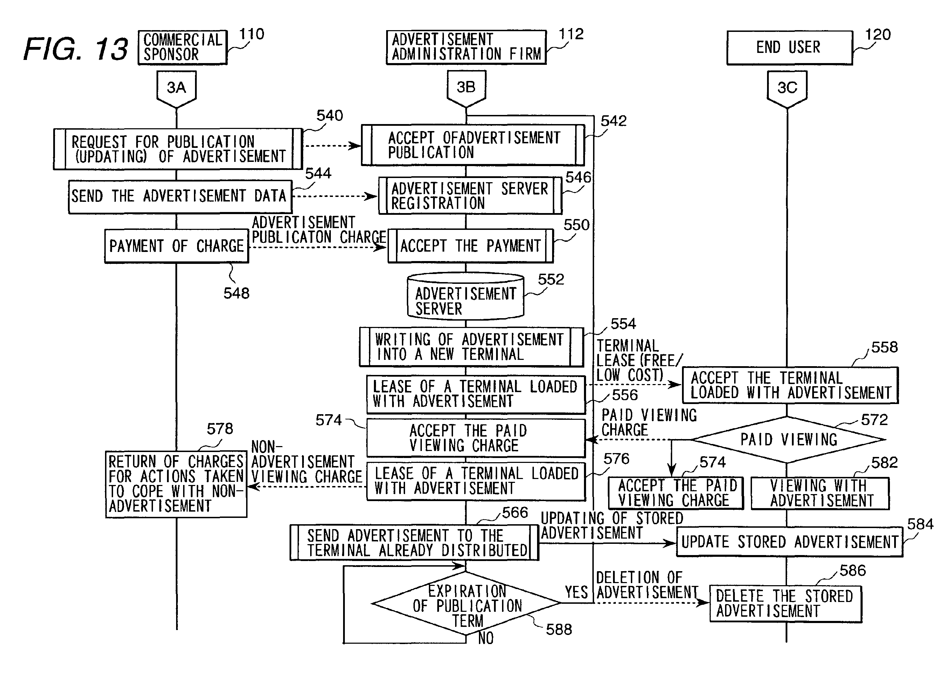

Fig. 13 is a diagram representing the business relation of the embodiment. It is the same as Fig. 12 up to the point where the end user 120 receives the terminal where advertisement has been stored (Step 558).

After the end user 120 has received the information receiver terminal 150, he determines if the program is to be watched for pay or not (Step 572). When he had determined to view the program without advertisement by paying a specified charge, he reports to the advertisement administration firm 112 that he wants to use paid viewing. In this case, use of the information receiver terminal 150 allows this communication to be sent to the advertisement administration firm 112 from the information receiver terminal.

After the advertisement administration firm 112 has received the viewing charge from the end user 120 for viewing the program on a paid basis (Step 574), the advertisement administration firm 112 calculates the amount of the charge for the unwatched advertisement to be returned to the commercial sponsor when the advertisement is not viewed (Step 576), and pays it back to the commercial sponsor 110 (Step 578).

For the end user 120 having agreed to viewing the advertisement, the advertisement administration firm 112 adds new advertisement to the advertisement data file 414 already distributed to the end user and recorded on the information receiver terminal 150, and updates it at the request of the commercial sponsor 110 (Step 580). This updating is carried out via the transmission line (Step 584). The advertisement administration firm 112 deletes data file 414 for the advertisement past the term of validity for publication from the information receiver terminal 150 having been distributed to the end user (Step 588). In this case, the date file is deleted through the transmission line or automatically by the calendar function built in the user terminal when the term of validity for publication has expired (Step 586).

In the embodiments discussed above, the information transmission line mainly used for transmission and reception has been used to describe the information transmission line using a satellite. However, the transmission line used is not restricted thereto. The communications line including the Internet, ISDN, DSL, or optical fiber cable, terrestrial radio wave, satellite or free combination thereof can be used as a wired or wireless information transmission line used for transmission or reception.

The present invention allows a viewer to select the advertisement to be played and to get various services by viewing the selected advertisement. It also allows a commercial sponsor to get a correct picture on the tendency of advertisement conforming to the taste of the viewer, to pay the advertisement charge almost accurately corresponding to the advertisement actually watched by the end user. This, the present invention greatly improves the efficiency of advertisement business.

## Claims

1. A method for providing advertisement information comprising;
a step of storing advertisement information provided by a commercial sponsor into an advertisement storage means,
a step of reading out advertisement information from said advertisement storage means,
a step of sending said read-out advertisement information via an information transmission line,
a step of receiving via the same information transmission line as said one or different from it the information on the history of a broadcasting receiver terminal having played said advertisement information, and
a step of using said history information to calculate the charge for advertisement information to be paid by said commercial sponsor.

2. A method for providing advertisement information according to Claim 1 **characterized in that** any one of radio wave via satellite, terrestrial radio wave, optical fiber line, ISDN line DSL and telephone line is used as said information transmission line.

3. A method for providing advertisement information according to Claim 1 **characterized in that** said transmission is provided by broadcasting.

4. A method for providing advertisement information according to Claim 1 **characterized in that** said advertisement information is sent to the broadcasting receiver terminal comprising an advertisement storage means for building up information.

5. A method for providing advertisement information according to any one of Claims 1 to 4 **characterized in that** said history information is used to calculate the merit charge supplied to said broadcasting receiver terminal.

6. A method for providing advertisement information according to Claim 5 **characterized in that** said merit charge is the discount rate for the rental charge or lease charge of said broadcasting receiver terminal.

7. A method for providing advertisement information according to Claim 5 **characterized in that** said merit charge is the discount rate for broadcasting viewing charge.

8. A method for providing advertisement information according to any one of Claims 1 to 4 **characterized in that** said history information is used to determine the value for coupon or point to be supplied to the broadcasting receiver terminal.

9. A method for providing advertisement information according to Claim 7 or 8 **characterized in that** said broadcasting receiver terminal is the one specified in advance.

10. A method for providing advertisement information according to Claim 9 **characterized in that** said broadcasting receiver terminal is provided with individual information on the user of the receiver terminal.

11. A method for providing advertisement information according to Claim 10 **characterized in that** said individual information is used to create statistic user information and said created statistic user information is supplied to said commercial sponsor.

12. A method for providing advertisement information according to Claim 11 **characterized in that** said statistic user information is the information on any one of the age, sex and residential area.

13. A method for providing advertisement information according to any one of Claims 1 to 12 **characterized** said history information is used to create statistic history information and said statistic history information is supplied to the commercial sponsor.

14. A method for providing advertisement information according to any one of Claims 10 to 12 **characterized** the statistic history information and individual information are used to obtain the advertisement viewing rate regarding any one of the age, sex and residential area, and the result is supplied to the commercial sponsor of the advertisement.

15. A method for providing advertisement information comprising;
a step of sending advertisement information via the information transmission line,
a step of receiving via the same information transmission line as said one or different from it the history information of the broadcasting receiver terminal having played said advertisement information,
a step of using the play conditions determined between said history information and the broadcasting receiver terminal to determine if the conditions are satisfied or not, and
a step of calculating the charge for the conditions not satisfied.

16. An advertisement information supply system comprising:
an advertisement storage means (108) for storing the advertisement information provided by the commercial sponsor,
an advertisement administration means (112) for reading the advertisement information sent from said advertisement storage means,
a transmitter/receiver unit for sending the advertisement information read by said advertisement administration means and for receiving the history information from the broadcasting receiver terminal having played said advertisement information,
a statistic history creating means (378-382) for creating the statistic history information for each commercial sponsor using said history information, and
an advertisement calculating means for calculating the advertisement charge for said advertisement information to be paid by the commercial sponsor.

17. An advertisement information supply system according to Claim 16 **characterized in that** said transmission is provided by broadcasting.

18. An advertisement information supply system according to Claim 16 **characterized in that** said advertisement information is sent to the broadcasting receiver terminal (150) equipped with an advertisement administration means for storing advertisement information.

19. An advertisement information supply system according to any one of Claims 16 to 18 **characterized in that** said history information is used to calculate the merit charge supplied to said broadcasting receiver terminal.

20. An advertisement information supply system according to Claim 19 **characterized in that** said merit charge is the discount rate for the rental charge or lease charge of said broadcasting receiver terminal.

21. An advertisement information supply system according to Claim 19 **characterized in that** said merit charge is the discount rate for broadcasting viewing charge.

22. An advertisement information supply system according to any one of Claims 16 to 18 **characterized in that** said history information is used to determine the value for coupon or point to be supplied to the broadcasting receiver terminal.

23. An advertisement information supply system according to Claim 21 or 22 **characterized in that** said broadcasting receiver terminal is the one specified in advance.

24. An advertisement information supply system according to Claim 23 **characterized in that** said broadcasting receiver terminal is provided with individual information on the user of the receiver terminal.

25. An advertisement information supply system according to Claim 24 **characterized in that** said individual information is used to create statistic user information and said created statistic user information is supplied to said commercial sponsor.

26. A broadcasting receiver terminal comprising:
a means for receiving program information broadcast by radio wave via satellite or terrestrial radio wave, and a means for outputting said received program information;
said broadcasting receiver terminal **characterized by** further comprising:
a step of storing the advertisement information broadcast in advance,
a step of detecting the information on the sender of said advertisement information inserted in said program information and broadcast, and
a step of outputting said advertisement information.

27. A broadcasting receiver terminal according to Claim 26 **characterized in that** said program information or advertisement information is received through a satellite on highly elliptical orbit.

28. A broadcasting receiver terminal according to Claim 26 or 27 **characterized in that** the history of playing said advertisement information is sent to the sender of said advertisement information through a satellite on highly elliptical orbit.

29. A broadcasting receiver terminal according to any one of Claims 26 to 28 **characterized in that**, every time said advertisement information is sent, the history thereof is played.

30. A broadcasting receiver terminal according to any one of Claims 26 to 29 **characterized in that** said advertisement information is played at the time of conditional access of said program information by said receiver terminal.

31. A broadcasting receiver terminal according to any one of Claims 26 to 30 **characterized in that** said advertisement information past the term of validity is deleted.
